# EUROPÄISCHE PATENTANMELDUNG

(11) **EP 2 337 004 A1**
(43) Veröffentlichungstag der Anmeldung: **22.06.2011**
(21) Anmeldenummer: 10189812.0
(22) Anmeldetag: 03.11.2010
(51) Int. Cl.: G09B 9/00, G09B 19/00

(54) **Test-, Trainings- und/oder Demonstrationssystem für Automatisierungssoftware zur Steuerung eines Materialflusses in einer förderungstechnischen Einrichtung**

(30) Priorität: 13.11.2009 DE 102009053292
(71) Anmelder: Siemens Aktiengesellschaft, 80333 München (DE)
(72) Erfinder: Iffländer, Bernhard, 92637, Weiden (DE)

(57) **Zusammenfassung**

Ein Test-, Trainings- und/oder Demonstrationssystem (20, 30) für Automatisierungssoftware zur Steuerung eines Materialflusses in einer förderungstechnischen Einrichtung (1) umfasst erfindungsgemäß einen Simulator (25), der den Materialfluss einschließlich einer Datenführung auf mit den Materialstücken beförderten Datenträgern (6) simuliert, wozu er in Abhängigkeit von Steuerdaten (S) das Verhalten von Förderelementen (2) und von Lese- und Schreibgeräte (7 bzw. 8) für die Datenträger (6) und in Abhängigkeit von Schreibdaten (D_{S}) den Dateninhalt der Datenträger (6) simuliert und dabei Prozessdaten (P), die den Materialfluss, das Verhalten der Förderelemente (2) und das Verhalten der Lese- und Schreibgeräte (7 bzw. 8) beschreiben, sowie Lesedaten (D_{L}), die den Dateninhalt der Datenträger (6) beschreiben erzeugt, und ein erstes Gerät (22, 31), auf dem die Steuerungssoftware (11) abläuft, wobei die Steuerungssoftware (11) die Steuerdaten (S) und die Schreibdaten (D_{S}) für den Simulator (25) in Abhängigkeit von den Prozessdaten (P) und den Lesedaten (D_{L})erzeugt.

## Beschreibung

Test-, Trainings- und/oder Demonstrationssystem für Automatisierungssoftware zur Steuerung eines Materialflusses in einer förderungstechnischen Einrichtung

Die Erfindung betrifft ein Test-, Trainings- und/oder Demonstrationssystem für Automatisierungssoftware zur Steuerung eines Materialflusses in einer förderungstechnischen Einrichtung gemäß Oberbegriff des Patentanspruchs 1.

Im Umfeld der Automatisierung werden zur Verfolgung von Materialien und zur Steuerung von Materialflüssen in förderungstechnischen Einrichtungen Identifikationsmechanismen verwendet. Hierbei ist jedem Materialstück ein mit diesem durch die Einrichtung beförderter Datenträger zugeordnet, der Daten enthält, die das Materialstück identifizieren und ggf. Auskunft über den Weg des Datenträgers durch die Einrichtung sowie über an dem Materialstück vorgenommene Handlungen (z.B. Bearbeitungsschritte) geben. Bei dem Datenträger kann es sich z.B. um einen Barcode, eine DataMatrix oder einen RFID handeln. Der Datenträger kann dabei z.B. direkt auf dem Materialstück, an einem lösbar an dem Materialstück befestigten Element oder an einem Transportmittel für das Materialstück angeordnet sein. Bei den Materialstücken kann es sich grundsätzlich um jede Art von einzelnen Gegenständen, Waren, Zwischen- oder Endprodukten handeln. Bei der förderungstechnischen Einrichtung handelt es sich beispielsweise um eine Anlage zur Fertigung eines Produktes oder um ein Lager.

Zum Lesen von Daten von den Datenträgern und zum Schreiben von Daten auf die Datenträger weist eine förderungstechnische Einrichtung typischerweise Lese- und Schreibgeräte auf. Daneben umfasst die förderungstechnische Einrichtung Förderelemente zur Beförderung der Materialstücke, ein Steuergerät mit einer Steuerungssoftware zur Steuerung der förderungstechnischen Einrichtung, eine Bedien- und Beobachtungseinrichtung mit einer Bedien- und Beobachtungssoftware zum Bedienen und Beobachten des Materialflusses in der förderungstechnischen Einrichtung sowie ein Datennetzwerk, über welches das Steuergerät mit den Förderelementen, den Lese- und Schreibgeräten sowie mit der Bedien- und Beobachtungsvorrichtung zum Datenaustausch verbunden ist.

Gerade bei komplexen förderungstechnischen Einrichtungen stellt die Erstellung der Automatisierungssoftware, die insbesondere die Erstellung der Steuerungssoftware und der Bedien- und Beobachtungssoftware umfasst, eine herausfordernde Aufgabe dar. Es besteht dabei der Bedarf, noch während der Softwareentwicklung die Software zu prüfen und zu optimieren, bevor sie in der förderungstechnischen Einrichtung eingesetzt wird oder sogar bevor überhaupt ein Auftrag zu einer Automatisierung einer derartigen Einrichtung erteilt wird. Weiterhin besteht ein Bedarf nach einer einfachen Möglichkeit, Bedienpersonal der Einrichtung an der Automatisierung zu trainieren. Für Vertriebszwecke ist es für einen Entwickler der Automatisierungssoftware weiterhin wünschenswert, die Automatisierung einer derartigen förderungstechnischen Einrichtung mit Identifikationsmechanismen für den Materialfluss außerhalb einer tatsächlichen Anlage einem potenziellen Kunden demonstrieren zu können. Auch während des Betriebs der förderungstechnischen Einrichtung sollen Änderungswünsche an der Automatisierung erst getestet werden können, bevor sie dann tatsächlich in der Einrichtung implementiert werden.

Aus der DE 10 2007 026 502 A1 ist grundsätzlich bereits ein Trainingssystem für ein Automatisierungssystem zur Steuerung eines technischen Prozesses bekannt, das einen Prozesssimulator zur Simulation des technischen Prozesses, einen Steuerungssimulator zur Simulation der Steuerungsgeräte des Automatisierungssystem einschließlich der darauf laufenden Steuerungssoftware und eine HMI-Schnittstelle mit Ein- und Ausgabekomponenten für einen Bediener des Trainingssystems umfasst.

Ausgehend hiervon ist es Aufgabe vorliegender Erfindung, eine Möglichkeit zu schaffen, mit der Automatisierungssoftware zur Steuerung eines Materialflusses in einer vorstehen beschriebenen förderungstechnischen Einrichtung getestet, Bedienpersonal an der Automatisierungssoftware trainiert und/oder die Automatisierung demonstriert werden kann.

Die Lösung dieser Aufgabe gelingt erfindungsgemäß durch ein Test-, Trainings- und/oder Demonstrationssystem gemäß Patentanspruch 1. Vorteilhafte Ausgestaltungen sind jeweils Gegenstand der Unteransprüche.

Ein erfindungsgemäßes Test-, Trainings- und/oder Demonstrationssystem umfasst
- einen Simulator, der den Materialfluss einschließlich der Datenführung auf den Datenträgern der Materialstücke simuliert, wozu er in Abhängigkeit von Steuerdaten das Verhalten der Förderelemente und der Lese- und Schreibgeräte für die Datenträger und in Abhängigkeit von Schreibdaten den Dateninhalt der Datenträger simuliert und dabei Prozessdaten, die den Materialfluss, das Verhalten der Förderelemente und das Verhalten der Lese- und Schreibgeräte beschreiben, sowie Lesedaten, die den Dateninhalt der Datenträger beschreiben, erzeugt, und
- ein erstes Gerät, auf dem die Steuerungssoftware abläuft, wobei die Steuerungssoftware die Steuerdaten und die Schreibdaten für den Simulator in Abhängigkeit von den Prozessdaten und den Lesedaten erzeugt.

Es können somit für einen Test der Steuerungssoftware und/ oder ein Training an der Steuerungssoftware die Lese- und Schreibprozesse der Datenträger und deren Verfolgung in der förderungstechnischen Einrichtung sowie eine daraus abgeleitete Materialflusssteuerung simuliert werden. Die Steuerungssoftware kann hierdurch, ohne dass hieran Änderungen vorgenommen werden müssen, außerhalb der eigentlichen förderungstechnischen Einrichtung, z.B. vor Ort bei einem Entwickler der Steuerungssoftware, oder auch innerhalb der förderungstechnischen Einrichtung, ohne dass diese Einrichtung in Betrieb gesetzt werden muss, getestet und/oder geschult werden. Außerdem kann - beispielsweise für Akquisitionszecke - ein Automatisierungssystem mit Identifikationsmechanismen demonstriert werden. Die Schreibdaten können dabei auch ein Bestandteil der Steuerdaten und die Lesedaten können auch ein Bestandteil der Prozessdaten sein.

Wenn die Bedien- und Beobachtungssoftware auf dem ersten Gerät oder auf einem zweiten Gerät abläuft, wobei die Bedien-und Beobachtungssoftware Eingabedaten von einer Bedienperson erfasst und Ausgabedaten an eine Bedienperson ausgibt, und wenn die auf dem ersten Gerät ablaufende Steuerungssoftware die Steuerdaten und die Schreibdaten in Abhängigkeit von Eingabedaten erzeugt und die Ausgabedaten in Abhängigkeit von den Prozessdaten und den Lesedaten erzeugt, kann gleichzeitig mit der Steuerungssoftware auch die Bedien- und Beobachtungssoftware, ohne dass hieran Änderungen vorgenommen werden müssen, getestet und/oder geschult werden.

Wenn das erste Gerät baugleich mit dem Steuergerät der förderungstechnischen Einrichtung ist, können das Verhalten der Lese- und Schreibgeräte im Takt der Zykluszeit des Steuergerätes und somit die Steuerungssoftware besonders genau getestet werden.

Wenn das zweite Gerät baugleich mit der Bedien- und Beobachtungseinrichtung der förderungstechnischen Einrichtung ist, kann die Bedien- und Beobachtungssoftware besonders wirklichkeitsnah getestet und/oder geschult werden.

Zur weiteren Genauigkeit des Tests, der Schulung und/oder der Demonstration sind das erste Gerät und der Simulator für den Materialfluss über Komponenten miteinander verbunden sind, die baugleich mit Komponenten sind, über die das Steuergerät mit den Förderelementen und den Schreib- und Lesegeräten in der förderungstechnischen Einrichtung im Datenaustausch steht. Hierdurch kann die Kommunikation über das Netzwerk und das Verhalten der Lese- und Schreibgeräte am Netzwerk simuliert und somit beim Test oder bei der Schulung der Automatisierungssoftware berücksichtigt werden.

Für ein Training, eine Demonstration oder eine Test mit geringeren Genauigkeitsanforderungen kann es auch ausreichend sein, wenn das erste Gerät bauungleich mit dem Steuergerät der förderungstechnischen Einrichtung ist (beispielsweise kann es sich um einen einfachen PC oder ein Notebook handeln) und dafür eine Software zur Simulation der Hardware des Steuergerätes umfasst.

Soll zur Vereinfachung auch auf Komponenten verzichtet werden, über die das Steuergerät mit den Förderelementen und den Schreib- und Lesegeräten in der förderungstechnischen Einrichtung im Datenaustausch steht, so ist es auch möglich, deren Verhalten zu simulieren. Das erste Gerät kann hierzu auch Software zur Simulation von Komponenten aufweisen, über die das Steuergerät mit den Förderelementen und den Schreib- und Lesegeräten in der förderungstechnischen Einrichtung im Datenaustausch steht.

Zur einfachen Modellierung der fertigungstechnischen Einrichtung in dem Simulator für den Materialfluss umfasst dieser von Vorteil eine Bibliothek unterschiedlicher Lese- und Schreibgeräte sowie Förderelemente.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Darin zeigen:
FIG 1 ein Beispiel für eine förderungstechnische Einrichtung mit Materialstücken mit Identifikationsdatenträgern,
FIG 2 ein erfindungsgemäßes Testsystem,
FIG 3 ein erfindungsgemäßes Trainings- und Demonstrationssystem und
FIG 4 ein Bibliothekselement für ein Lese- und Schreibgerät.

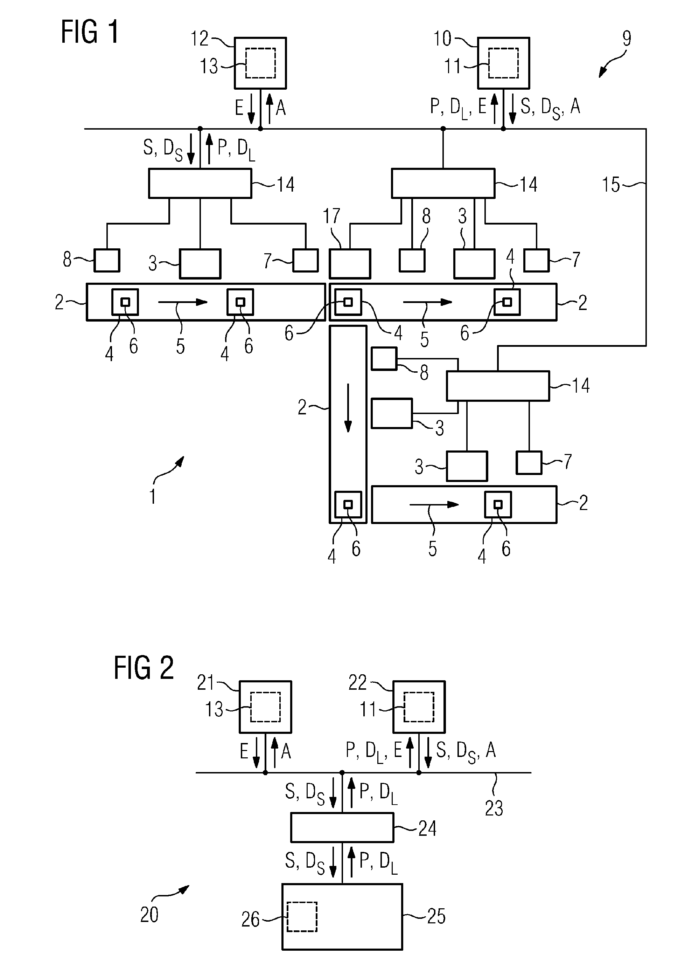

Die FIG 1 zeigt beispielhaft eine förderungstechnische Einrichtung 1, die mehrere Förderelemente 2 (z.B. Rollenförderer, Elektrohängebahn, Kettenförderer, Skidförderer) umfasst, die von Motoren 3 angetrieben werden. Durch die Förderelemente 2 werden verschiedene einzelne Materialstücke 4 in den mit den Pfeilen 5 gekennzeichneten Richtungen befördert. Eine Schiebeeinrichtung 17 schiebt bei Bedarf ein Materialstück von einem Förderelement 4 auf ein anderes, hierzu rechtwinklig angeordnetes Förderelement 4. Bei der förderungstechnischen Einrichtung 1 handelt es sich beispielsweise um eine Fertigungslinie oder um eine Verteileinrichtung für ein Lager.

Jedem Materialstück 4 ist ein Datenträger 6 (z.B. ein Barcode, eine DataMatrix oder ein RFID) zugeordnet, der mit dem Materialstück 4 durch die förderungstechnische Einrichtung befördert wird. Der Datenträger 6 kann dabei beispielsweise direkt auf dem Materialstück 4, an einem lösbar an dem Materialstück 4 befestigten Halteelement oder an einem Transportmittel für das Materialstück 4 angeordnet sein. Bei den Materialstücken 4 kann es sich grundsätzlich um jede Art von einzelnen Gegenständen, Waren, Zwischen- oder Endprodukten handeln.

Zum Lesen von Daten von den Datenträgern 6 und zum Schreiben von Daten auf die Datenträger 6 weist die förderungstechnische Einrichtung 1 mehrere Lesegeräte 7 (z.B. Barcode-Scanner, DataMatrix-Kamera, RFID-Reader) und Schreibgeräte 8 (z.B. Barcode-Drucker, DataMatrix-Drucker, RFID-Schreibgerät) auf. Ein Lesegerät 7 und ein Schreibgerät 8 können dabei auch zu einem einzigen Gerät zusammengefasst sein. Die Lese- und Schreibgeräte 7, 8 sind Bestandteil eines Automatisierungssystems 9 für die förderungstechnische Einrichtung 1. Das Automatisierungssystem 9 umfasst zusätzlich noch ein Steuergerät 10 mit einer Steuerungssoftware 11, eine Bedien- und Beobachtungseinrichtung 12 mit einer Bedien- und Beobachtungssoftware 13, dezentrale periphere Komponenten 14 sowie ein diese Komponenten zum Datenaustausch verbindendes Datennetzwerk 15, das z.B. als ein Profibus oder Profinet ausgebildet ist.

Die Lese- und Schreibgeräte 7, 8 sowie die Antriebsmotoren 3 der Förderelemente 2 sind an jeweils eine zugeordnete periphere Komponente 14 angeschlossen. Die peripheren Komponenten 14, z.B. Netzwerkkarten, dienen zur Umsetzung der über das Datennetzwerk 15 empfangenen Daten in Signale, die von den angeschlossenen Komponenten weiterverarbeitet werden können, und umgekehrt.

Das Steuergerät 10 sendet über das Datennetzwerk 15 Steuerdaten S zur Steuerung des Betriebs der Lese- und Schreibgeräte 7, 8 sowie der Förderelemente 2 und Schreibdaten D_{S}, die von den Schreibgeräten 8 auf die Datenträger 6 geschrieben werden sollen, an die Lese- und Schreibgeräte 7, 8. Die Lese- und Schreibgeräte 7, 8 und die Förderelemente senden wiederum an das Steuergerät 19 Prozessdaten P, die Auskunft über den Betriebszustand der Lese- und Schreibgeräte 7, 8 und der Förderelemente geben, sowie von den Lesegeräten 6 aus den Datenträgern 6 ausgelesene Lesedaten D_{L}. Die Schreibdaten Dₛ können dabei auch ein Bestandteil der Steuerdaten S und die Lesedaten D_{L} können auch ein Bestandteil der Prozessdaten P sein.

Die Steuerungssoftware 11 erzeugt in Abhängigkeit von den Prozessdaten P und den Lesedaten D_{L} Ausgabedaten A, die an die Bedien- und Beobachtungseinrichtung 12 übertragen und mittels der Bedien- und Beobachtungssoftware 13 für eine Bedienperson der Einrichtung 1 ausgegeben werden. Von der Bedienperson, z.B. über eine Tastatur oder einen Touchscreen, in die Bedien- und Beobachtungseinrichtung 12 eingegebene Eingabedaten E werden von der Bedien- und Beobachtungseinrichtung 12 an das Steuergerät 10 übertragen und darin bei der Erzeugung der Steuerdaten S und der Schreibdaten Dₛ berücksichtigt.

Ein in der FIG 2 gezeigtes erfindungsgemäßes Testsystem für die Automatisierungssoftware (d.h. der Steuerungssoftware 11 und der Bedien- und Beobachtungssoftware 13) der in FIG 1 gezeigten förderungstechnischen Einrichtung 1 umfasst ein Gerät 21, ein Steuergerät 22, ein Datennetzwerk 23, eine periphere Netzwerkkomponente 24 sowie einen Simulator 25.

Das Gerät 21 ist dabei baugleich mit der Bedien- und Beobachtungseinrichtung 12 und das Steuergerät 22 ist baugleich mit dem Steuergerät 10 der förderungstechnischen Einrichtung 1. Vorzugsweise ist auch die periphere Netzwerkkomponente 24 baugleich mit einer peripheren Netzwerkkomponente 14 der förderungstechnischen Einrichtung 1 und das Datennetzwerk 23 besteht aus den gleichen Komponenten wie das Datennetzwerk 15 der förderungstechnischen Einrichtung 1.

Auf dem Gerät 21 läuft eine zu testende Bedien- und Beobachtungssoftware 13 und auf dem Steuergerät 22 läuft eine zu testende Steuerungssoftware 11 der förderungstechnischen Einrichtung 1.

Die Bedien- und Beobachtungssoftware 13 erfasst dabei Eingabedaten E von einer Bedienperson und sendet sie an das Steuergerät 22. Außerdem gibt sie von dem Steuergerät 22 empfangene Ausgabedaten A an eine Bedienperson aus.

Durch den Simulator 25 wird im Takt der Zykluszeit der Steuerung 10 (d.h. in Echtzeit) der Materialfluss einschließlich der Datenführung auf den Datenträgern 6 der Materialstücke 4 und das Verhalten der Lese- und Schreibgeräte 7, 8 simuliert. Der Simulator 25 simuliert hierzu in Abhängigkeit von Steuerdaten S, die er von dem Steuergerät 22 empfängt, das Verhalten der Förderelemente 2 und der Lese- und Schreibgeräte 7, 8 für die Datenträger 6. Außerdem simuliert er in Abhängigkeit von Schreibdaten D_{S}, die er von dem Steuergerät 22 empfängt, den Dateninhalt der Datenträger 6. Dabei erzeugt er Prozessdaten P, die den Materialfluss, das Verhalten der Förderelemente 2 und das Verhalten der Lese- und Schreibgeräte 7, 8 beschreiben, sowie Lesedaten D_{L}, die den Dateninhalt der Datenträger 6 beschreiben. Die Prozessdaten P und die Lesedaten D_{L} werden an das Steuergerät 22 übertragen. In dem Steuergerät werden durch die Steuerungssoftware 11 die Steuerdaten S und die Schreibdaten Dₛ für den Simulator 25 in Abhängigkeit von den Prozessdaten P, den Lesedaten D_{L} und den Eingabedaten E erzeugt. Die Schreibdaten Dₛ können dabei auch ein Bestandteil der Steuerdaten S und die Lesedaten D_{L} können auch ein Bestandteil der Prozessdaten P sein.

Es können somit die Bedien- und Beobachtungssoftware 13 und die Steuerungssoftware 11 einschließlich der Identifikationsmechanismen über die Datenträger 6 und der Datenmitführung in der Einrichtung 1 getestet und optimiert werden. Das Testsystem kann dabei auch für einen Abnahmetest für die Software genutzt werden. Weiterhin kann das Testsystem 20 auch Bestandteil eines sogenannten "Schattensystems" sein, an dem alle Änderungen an der förderungstechnischen Einrichtung 1 erst getestet werden, z.B. auf (Funktionalität, Fehlerfreiheit, Virenfreiheit), bevor sie tatsächlich in der förderungstechnischen Einrichtung implementiert werden oder sogar bevor ein Auftrag für derartige Änderungen erteilt wird.

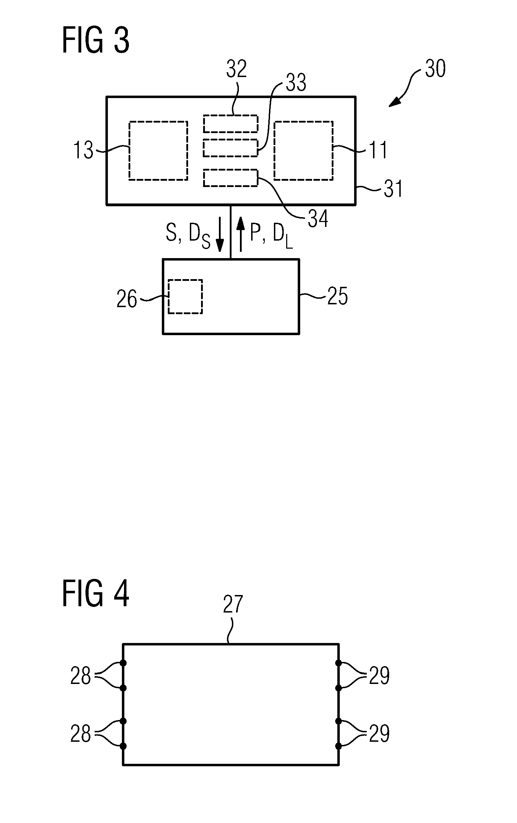

Ein in der FIG 3 gezeigtes Trainings- und Demonstrationssystem 30 unterscheidet sich von dem in FIG 2 dargestellten Testsystem 20 dadurch, dass es einen Rechner (PC) 31 aufweist, der die Hardware des Steuerungsgerätes 10, das Datennetzwerk 15 und die periphere(n) Komponente(n) 14 simuliert. Der Rechner (PC) 31 ist dabei bauungleich mit dem Steuergerät 10 der Einrichtung 1. Der Rechner 31 weist hierzu neben der Steuerungssoftware 11 und der Bedien- und Beobachtungssoftware 13 noch Software 32 für die Simulation (Emulation) der Hardware des Steuergerätes 10, Software 33 für die Simulation (Emulation) des Datennetzwerkes 15 und Software für die Simulation (Emulation) der periphere(n) Komponente(n) 14 auf. Hierdurch kann in dem Rechner 31 die gesamte Automatisierungsstruktur simuliert bzw. emuliert werden. Ein derartiges Trainingssystem 30 kann statt auf 2 Geräten (PCs oder Notebooks) auch auf nur einem einzigen Gerät (PC oder Notebook) installiert werden und lässt sich neben dem Training von Bedienpersonal auch besonders vorteilhaft als Demonstrationssystem für die Automatisierung der Einrichtung 1 benutzen.

In einer derartigen simulierten bzw. emulierten Umgebung lassen sich gleichzeitig Abbilder der Steuerungssoftware 11 mit dem aktuellen Stand aller Variablen (z.B. Zähler, Merker) und ein Abbild der Simulation in dem Simulator 25 mit einem Zustand der simulierten Geräte und Prozesse speichern. Damit kann jede Materialflusssituation (z.B. Orte und Identifikationsnummern der Materialstücke, Zustände der Förderelemente und der dazugehörende Zustand der Steuerungssoftware) abgespeichert und - z.B. zu Trainingszwecken - auf Knopfdruck wieder aufgerufen werden. Zusätzlich lässt sich optional ein Abbild des aktuellen Zustands der auf dem Rechner 31 laufenden Bedien- und Beobachtungssoftware 13 erstellen (z.B. mit Tools wie VMWare). Damit lässt sich eine komplette simulierte Betriebssituation abspeichern (z.B. mit Zustand eines Fertigungs- oder Lagersystems), die wieder aufgerufen werden kann.

Zur einfachen Modellierung der fertigungstechnischen Einrichtung 1 in dem Simulator 25 umfasst dieser von Vorteil eine Bibliothek 26 unterschiedlicher Lese- und Schreibgeräte sowie Förderelemente. Beispielhaft zeigt hierzu FIG 4 ein Bibliothekselement 27 für ein Lesegerät. Das Bibliothekselement 27 weist eingangseitige Konnektoren 28 für Eingangssignale (z.B. Steuersignale) auf, die an Steuerungssignale oder Ausgangssignale anderer Bibliothekselemente angeschlossen werden können. Ausgangsseitige Konnektoren 29 mit Ausgangssignalen (z.B. in Bezug auf Betriebszustand, aus einem Datenträger ausgelesene Daten, etc.), können an Steuerungssignale oder Eingangssignale anderer Bibliothekselemente angeschlossen werden. Ein Bibliothekselement kann auch eine ganze Logik (z.B. Förderelement und Lese- und Schreibgerät) abbilden.

## Patentansprüche

1. Test-, Trainings- und/oder Demonstrationssystem (20, 30) für Automatisierungssoftware zur Steuerung eines Materialflusses in einer förderungstechnischen Einrichtung (1), wobei jedem Materialstück (4) des Materialflusses ein mit diesem durch die Einrichtung (1) beförderter Datenträger (6) zugeordnet ist, und wobei die förderungstechnische Einrichtung
- Förderelemente (2) zur Beförderung der Materialstücke (4),
- Lese- und Schreibgeräte (7 bzw. 8) zum Lesen von Daten von den Datenträgern (6) und zum Schreiben von Daten auf die Datenträger (6),
- ein Steuergerät (10) mit einer Steuerungssoftware (11) zur Steuerung der förderungstechnischen Einrichtung (1),
- eine Bedien- und Beobachtungseinrichtung (12) mit einer Bedien- und Beobachtungssoftware (13) zum Bedienen und Beobachten der förderungstechnischen Einrichtung (1) sowie
- ein Datennetzwerk (15), über die das Steuergerät (10) mit den Förderelementen (2), den Lese- und Schreibgeräten (7 bzw.. 8) sowie mit der Bedien- und Beobachtungseinrichtung (12) zum Datenaustausch verbunden ist, umfasst, **gekennzeichnet durch**
- einen Simulator (25), der den Materialfluss einschließlich der Datenführung auf den Datenträgern (6) der Materialstücke (4) simuliert, wozu er in Abhängigkeit von Steuerdaten (S) das Verhalten der Förderelemente (2) und der Lese- und Schreibgeräte (7 bzw. 8) für die Datenträger (6) und in Abhängigkeit von Schreibdaten (Dₛ) den Dateninhalt der Datenträger (6) simuliert und dabei Prozessdaten (P), die den Materialfluss, das Verhalten der Förderelemente (2) und das Verhalten der Lese- und Schreibgeräte (7 bzw. 8) beschreiben, sowie Lesedaten (D_{L}), die den Dateninhalt der Datenträger (6) beschreiben, erzeugt,
- ein erstes Gerät (22, 31), auf dem die Steuerungssoftware (11) abläuft, wobei die Steuerungssoftware (11) die Steuerdaten (S) und die Schreibdaten (D_{S}) für den Simulator (25) in Abhängigkeit von den Prozessdaten (P) und den Lesedaten (D_{L}) erzeugt.

2. Test-, Trainings- und/oder Demonstrationssystem (20, 30) nach Anspruch 1, **dadurch gekennzeichnet, dass**
- die Bedien- und Beobachtungssoftware (13) auf dem ersten Gerät (31) oder auf einem zweiten Gerät (21) abläuft, wobei die Bedien- und Beobachtungssoftware (13) Eingabedaten (E) von einer Bedienperson erfasst und Ausgabedaten (A) an eine Bedienperson ausgibt, und dass
- die auf dem ersten Gerät (22) ablaufende Steuerungssoftware (11) die Steuerdaten (S) und die Schreibdaten (Dₛ) in Abhängigkeit von den Eingabedaten (E) erzeugt und die Ausgabedaten (A) in Abhängigkeit von den Prozessdaten (P) und den Lesedaten (D_{L}) erzeugt.

3. Test-, Trainings- und/oder Demonstrationssystem (20, 30) nach Anspruch 1 oder 2, **dadurch gekennzeichnet, dass** das erste Gerät (22) baugleich mit dem Steuergerät (10) der förderungstechnischen Einrichtung (1) ist.

4. Test-, Trainings- und/oder Demonstrationssystem (20, 30) nach Anspruch 2 oder 3, **dadurch gekennzeichnet, dass** das zweite Gerät (21) baugleich mit der Bedien- und Beobachtungseinrichtung (12) der förderungstechnischen Einrichtung (1) ist.

5. Test-, Trainings- und/oder Demonstrationssystem (20, 30) nach Anspruch 3 oder 4, **dadurch gekennzeichnet**, das erste Gerät (22) und der Simulator (25) für den Materialfluss über Komponenten (23, 24) miteinander verbunden sind, die baugleich mit Komponenten (14, 15) sind, über die das Steuergerät (10) mit den Förderelementen (2) und den Schreib- und Lesegeräten (7, 8) in der förderungstechnischen Einrichtung (1) im Datenaustausch steht.

6. Test-, Trainings- und/oder Demonstrationssystem (20, 30) nach Anspruch 1 oder 2, **dadurch gekennzeichnet, dass** das erste Gerät (31) bauungleich mit dem Steuergerät (10) der förderungstechnischen Einrichtung (1) ist und Software (32) zur Simulation der Hardware des Steuergerätes (10) umfasst.

7. Test-, Trainings- und/oder Demonstrationssystem (20, 30) nach Anspruch 6, **dadurch gekennzeichnet, dass** das erste Gerät (31) Software (33, 34) zur Simulation von Komponenten (14, 15) aufweist, über die das Steuergerät (10) mit den Förderelementen (2) und den Schreib- und Lesegeräten (7, 8) in der förderungstechnischen Einrichtung (1) im Datenaustausch steht.

8. Test-, Trainings- und/oder Demonstrationssystem (20, 30) nach einem der vorhergehenden Ansprüche, **dadurch gekennzeichnet, dass** der Simulator (25) für den Materialfluss eine Bibliothek (26) unterschiedlicher Lese- und Schreibgeräte sowie Förderelemente umfasst.
